# EUROPÄISCHE PATENTSCHRIFT

(11) **EP 2 616 871 B1**
(45) Veröffentlichungstag und Bekanntmachung des Hinweises auf die Patenterteilung: **21.05.2014**
(21) Anmeldenummer: 11761043.6
(22) Anmeldetag: 16.09.2011
(51) Int. Cl.: B60K 35/00, B60R 11/00, B60R 11/02, G02B 27/01, G03B 21/54

(54) **ANORDNUNG ZUR BEFESTIGUNG VON TRÄGERN FÜR PROJEKTIONSSCHIRME VON HEAD-UP-DISPLAYS**
ARRANGEMENT FOR MOUNTING CARRIERS FOR PROJECTION SCREENS OF HEAD-UP-DISPLAYS
ENSEMBLE DE FIXATION DE SUPPORTS POUR DES ÉCRANS DE PROJECTION DE DISPOSITIFS D'AFFICHAGE TÊTE-HAUTE

(30) Priorität: 17.09.2010 DE 102010045861
(43) Veröffentlichungstag der Anmeldung: 24.07.2013
(73) Patentinhaber: Johnson Controls GmbH, 51399 Burscheid (DE)
(72) Erfinder: KUNZE, Norbert, 65582 Diez (DE); RUMPF, Horst, 35745 Herborn (DE)
(74) Vertreter: Finger, Catrin
(86) Internationale Anmeldenummer: PCT/EP2011/066063
(87) Internationale Veröffentlichungsnummer: WO 2012/035127

(56) Entgegenhaltungen:
- WO-A2-92/19992
- DE-A1-102009 043 038

## Beschreibung

Die Erfindung betrifft eine Anordnung zur Befestigung eines Projektionsschirms für ein Head-up-Display, der an einer Windschutzscheibe eines Fahrzeugs im Sichtfeld des Fahrers entfernbar anbringbar ist.

Auf den Projektionsschirm werden Fahrzeuginformationen von einem TFT-Display projiziert. Projektionsschirme sind hohen mechanischen und thermischen Beanspruchungen ausgesetzt, welche durch hohe Temperaturen, Sonnenlicht und Kratzspuren verursacht werden. Deshalb müssen diese Bauteile im Laufe der Lebensdauer eines Fahrzeuges in der Regel mehrfach ausgewechselt werden.

Bei den im Stand der Technik bekannten Anordnungen muss bei beschädigter Projektionsfläche die gesamte Anordnung ausgewechselt werden.

In JP 2004 41 26 450 A1 ist eine Anordnung beschrieben, bei der ein Projektionsschirm mit Hilfe einer gelenkigen Hebelanordnung von der Windschutzscheibe in eine geschützte Position geschwenkt werden kann. Damit kann zwar die Lebensdauer der Projektionsfläche erhöht werden, beim Austausch derselben muss aber die Gesamtanordnung demontiert werden.

Die gattungsbildende WO 92/19992 A2 beschreibt eine Kombination mit einem Instrument Display System zur Verwendung in einem Personenkraftwagen, um eine visuelle Darstellung der Daten des Instruments auf der Beifahrerseite darzustellen. Das System umfasst eine Maske, einen Elektromotor zum Bewegen der Maske und eine Steuereinrichtung zum Steuern der Bewegung der Maske, wobei der Elektromotor als Reaktion auf die Steuereinrichtung und mit einer Statoranordnung und einen Rotor zum Drehen relativ zu der Statoranordnung ausgebildet ist. Zur Verbesserung umfasst der Rotor einen zylindrischen Magneten, welcher mit der Maske verbunden ist um die Maske zu bewegen und zu positionieren über der Statoranordnung zum Drehen ohne Statoranordnung, um der Maske zu ermöglichen die Daten des Instruments auf den Fahrgast zu vermitteln.

Ferner ist aus DE 10 2009 043 038 A1 eine Anzeigeeinrichtung für ein Kraftfahrzeug bekannt, welche in eine vorbestimmte Gebrauchsstellung verbringbar ist. Die Anzeigeeinheit wird an einem Träger mittels eines Befestigungsmittels gehalten, wobei in einer Gebrauchsstellung, in welcher das eine Befestigungsmittel von dem Träger gelöst ist, nur ein Rückhalteelement die Anzeigeeinheit noch an dem Träger hält.

Aufgabe der vorliegenden Erfindung ist es, eine Anordnung zu schaffen, die ein einfaches Auswechseln eines zu ersetzenden oder instandgesetzten Projektionsschirms ermöglicht.

Die Aufgabe wird erfindungsgemäß mit einer Anordnung gelöst, die eine Halterung für den Projektionsschirm enthält, welche mit einem Grundgestell eine lösbare Verbindung bildet, wobei die Halterung einen Träger aufweist, an dem der Projektionsschirm befestigt ist und der mit mindestens zwei magnetischen Koppelstellen mit dem Grundgestell verbindbar ist.

Die lösbare Verbindung enthält einen stabilen Träger, an dem der Projektionsschirm befestigt ist und der gewährleistet, dass beim Auswechseln die optische Fläche des Projektionsschirms nicht deformiert wird.

Um eine definierte Anlage zu gewährleisten, werden Koppelstellen mit punkförmiger oder linienförmiger Berührung angeordnet. Bei ausschließlich punktförmiger Berührung sind drei Koppelstellen erforderlich. Bei linienförmiger Berührung sind mindestens zwei Koppelstellen erforderlich.

Dabei wird eine erste magnetische Koppelstelle von einer Prisma-Kugel-Paarung oder Prisma-Zylinder-Paarung gebildet und eine zweite magnetische Koppelstelle ist davon beabstandet angeordnet.

Mit dieser Gestaltung kann eine exakt definierte Anlage gewährleistet werden, wobei die Montage und Demontage einfach und ohne Hilfsmittel erfolgen kann.

Die beabstandet angeordnete zweite magnetische Koppelstelle kann von einer Ebene-Kugel-Paarung oder einer Ebene-Zylinder-Paarung gebildet werden. Damit kann eine hohe Positioniergenauigkeit und eine wirksame Sicherung gegen Verdrehen gewährleistet werden.

Für die magnetischen Koppelstellen werden vorteilhaft Permanentmagnete verwendet.

Vorzugsweise werden die Magnete am Grundgestell angebracht und am Träger werden zu den Magneten korrespondierende Gegenstücke aus einem ferromagnetischen Material angeordnet.

Ferner ist es möglich, dass die Magnete am Träger angebracht sind und am Grundgestell zu den Magneten korrespondierende Gegenstücke aus einem ferromagnetischen Material angeordnet sind.

Durch eine Snap-in-Verbindung kann eine zusätzliche Sicherung der Verbindung des Trägers mit dem Grundgestell erreicht werden. Beim Einsetzen des Trägers in das Grundgestell kann damit auch das Erreichen der Sollposition signalisiert werden.

Bei einer bevorzugten Ausführung der Snap-in-Verbindung greift eine am Grundgestell befestigte Sicherungsfeder in eine am Träger angebrachte Ausnehmung ein.

Anhand der beigefügten schematischen Figur wird die Erfindung näher erläutert.

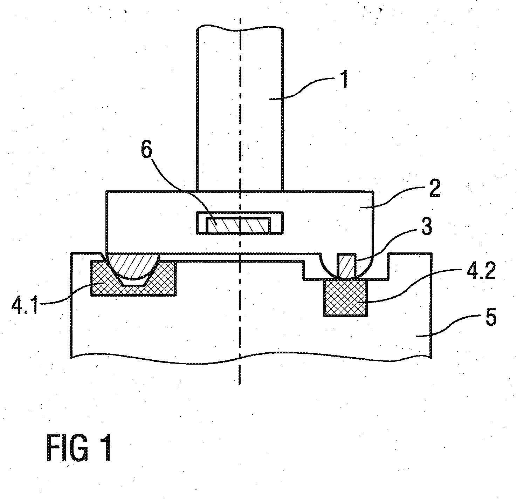

Die **Figur 1** zeigt in einer schematischen Darstellung eine Ausführungsmöglichkeit der Anordnung.

An einem Träger 1 ist der hier nicht dargestellte Projektionsschirm befestigt. Der Träger 1 enthält an seiner einem Grundgestell 5 zugewanden Seite ein Auslegerteil 2, an dem zylindrische oder kugelsegmentförmige Gegenstücke 3 aus einem ferromagnetischen Material angebracht sind. Die Gegenstücke 3 greifen in Vertiefungen ein, welche an der dem Träger 1 zugewandten Seite des Grundgestells 5 angebracht sind und in denen sich Magnete 4 befinden. Der in der Figur links dargestellte Magnet 4.1 weist eine Vertiefung, der rechts dargestellte Magnet 4.2 eine ebene Oberfläche auf. Diese Oberflächen bilden die Kontaktflächen zu den ferromagnetischen Gegenstücken 3. Damit wird eine lösbare Verbindung geschaffen, die ein exaktes Positionieren des Trägers 1 am Grundgestell 5 gewährleistet.

Es sind verschiedene Gestaltungsformen der Paarungsstellen möglich. Die Gegenstücke 3 können als halbzylinder- oder als halbkugelförmige Teile ausgebildet sein. Die Magnete 4.1 können prismatische oder kegelförmige Vertiefungen aufweisen.

Mit einer zusätzlich am Grundgestell 5 befestigten Sicherungsfeder 6, welche beim Erreichen der Sollposition in eine am Träger 1 angebrachte Ausnehmung einrastet, wird die Position im montierten Zustand gesichert.

### Bezugszeichenliste

- 1: Träger
- 2: Auslegerteil des Trägers
- 3: Gegenstück aus ferromagnetischem Material
- 4: Magnete
- 4.1: Magnet mit Vertiefung
- 4.2: Magnet mit ebener Kontaktfläche
- 5: Grundgestell
- 6: Sicherungsfeder

## Patentansprüche

1. Anordnung zur Befestigung eines Projektionsschirms für ein Headup-Display, der an einer Windschutzscheibe eines Fahrzeugs im Sichtfeld des Fahrers entfernbar anbringbar ist, wobei die Anordnung eine Halterung für den Projektionsschirm enthält, wobei die Halterung einen Träger (1) aufweist, an dem der Projektionsschirm befestigt ist, **dadurch gekennzeichnet, dass** die Halterung mit einem Grundgestell (5) eine lösbare Verbindung bildet, und der Träger (1) mit mindestens zwei magnetischen Koppelstellen mit dem Grundgestell (5) verbindbar ist, wobei eine erste magnetische Koppelstelle von einer Prisma-Kugel-Paarung oder Prisma-Zylinder-Paarung gebildet wird und eine zweite magnetische Koppelstelle davon beabstandet angeordnet ist.

2. Anordnung nach Anspruch 1, **dadurch gekennzeichnet, dass** die beabstandet angeordnete zweite magnetische Koppelstelle von einer Ebene-Kugel-Paarung gebildet wird.

3. Anordnung nach Anspruch 1, **dadurch gekennzeichnet, dass** die beabstandet angeordnete zweite magnetische Koppelstelle von einer Ebene-Zylinder-Paarung gebildet wird.

4. Anordnung nach einem der vorhergehenden Ansprüche, **dadurch gekennzeichnet, dass** die magnetischen Koppelstellen Magnete (4) enthalten, die als Permanentmagnete ausgebildet sind.

5. Anordnung nach Anspruch 4, **dadurch gekennzeichnet, dass** die Magnete (4) am Grundgestell (5) angebracht sind und am Träger (1) zu den Magneten (4) korrespondierende Gegenstücke (3) aus einem ferromagnetischen Material angeordnet sind.

6. Anordnung nach Anspruch 1, **dadurch gekennzeichnet, dass** die Magnete (4) am Träger (1) angebracht sind und am Grundgestell (5) zu den Magneten (4) korrespondierende Gegenstücke (3) aus einem ferromagnetischen Material angeordnet sind.

7. Anordnung nach einem der vorhergehenden Ansprüche, **dadurch gekennzeichnet, dass** die Verbindung des Trägers (1) mit dem Grundgestell (5) zusätzlich mit einer Snap-in-Verbindung gesichert ist.

8. Anordnung nach Anspruch 7, **dadurch gekennzeichnet, dass** die Snap-in-Verbindung aus einer am Grundgestell (5) befestigten Sicherungsfeder (6) und einer am Träger (1) angebrachten Ausnehmung gebildet wird.

## Claims

1. Arrangement for mounting a projection screen for a head-up display, which can be fitted in a removable manner on a windshield of a vehicle in the driver's field of vision, wherein the arrangement contains a holder for the projection screen, wherein the holder has a carrier (1) on which the projection screen is mounted, **characterized in that** the holder forms a releasable connection to a basic framework (5), wherein the carrier (1), can be connected to the basic framework (5) by way of at least two magnetic coupling locations, wherein a first magnetic coupling location is formed by a prism/sphere pairing or a prism/cylinder pairing and a second magnetic coupling location is spaced apart therefrom.

2. Arrangement as claimed in claim 1, **characterized in that** the spaced-apart second magnetic coupling location is formed by a plane/sphere pairing.

3. Arrangement as claimed in claim 1, **characterized in that** the spaced-apart second magnetic coupling location is formed by a plane/cylinder pairing.

4. Arrangement as claimed in one of the preceding claims, **characterized in that** the magnetic coupling locations contain magnets (4) which are designed as permanent magnets.

5. Arrangement as claimed in claim 4, **characterized in that** the magnets (4) are fitted on the basic framework (5), and counterparts (3), which correspond to the magnets (4) and are made of a ferromagnetic material, are arranged on the carrier (1).

6. Arrangement as claimed in claim 1, **characterized in that** the magnets (4) are fitted on the carrier (1), and counterparts (3), which correspond to the magnets (4) and are made of a ferromagnetic material, are arranged on the basic framework (5).

7. Arrangement as claimed in one of the preceding claims, **characterized in that** the connection between the carriers (1) and the basic framework (5) is secured, in addition, by a snap-in connection.

8. Arrangement as claimed in claim 7, **characterized in that** the snap-in connection is formed from a securing tongue (6), which is mounted on the basic framework (5), and an aperture, which is provided on the carrier (1).

## Revendications

1. Ensemble de fixation d'un écran de projection pour un dispositif d'affichage tête haute, lequel peut être attaché de manière amovible à un pare-brise d'un véhicule dans le champ de vision du conducteur, l'ensemble contenant une fixation pour l'écran de projection, la fixation comprenant un support (1) sur lequel est fixé l'écran de projection, **caractérisé en ce que** la fixation forme avec un cadre de base (5) une liaison libérable et le support (1) peut être relié au cadre de base (5) à l'aide d'au moins deux points d'accouplement magnétiques, un premier point d'accouplement magnétique étant formé par une paire prisme/sphère ou une paire prisme/cylindre et un deuxième point d'accouplement magnétique étant disposé de manière espacée par rapport à celui-ci.

2. Ensemble selon la revendication 1, **caractérisé en ce que** le deuxième point d'accouplement magnétique disposé de manière espacée est formé par une paire plan/sphère.

3. Ensemble selon la revendication 1, **caractérisé en ce que** le deuxième point d'accouplement magnétique disposé de manière espacée est formé par une paire plan/cylindre.

4. Ensemble selon l'une quelconque des revendications précédentes, **caractérisé en ce que** les points d'accouplement magnétiques comportent des aimants (4) qui sont réalisés sous forme d'aimants permanents.

5. Ensemble selon la revendication 4, **caractérisé en ce que** les aimants (4) sont attachés au cadre de base (5) et des pièces conjuguées (3) constituées d'un matériau ferromagnétique et correspondant aux aimants (4) sont disposées sur le support (1).

6. Ensemble selon la revendication 1, **caractérisé en ce que** les aimants (4) sont attachés au support (1) et des pièces conjuguées (3) constituées d'un matériau ferromagnétique et correspondant aux aimants (4) sont disposées sur le cadre de base (5).

7. Ensemble selon l'une quelconque des revendications précédentes, **caractérisé en ce que** la liaison du support (1) au cadre de base (5) est en outre bloquée à l'aide d'une liaison par encliquetage.

8. Ensemble selon la revendication 7, **caractérisé en ce que** la liaison par encliquetage est formée par un ressort de blocage (6) fixé sur le cadre de base (5) et par un évidement prévu sur le support (1).
